# EUROPEAN PATENT APPLICATION

(11) **EP 0 767 568 A2**
(43) Date of publication of application: **09.04.1997**
(21) Application number: 96113939.1
(22) Date of filing: 30.08.1996
(51) Int. Cl.: H04M 3/42, H04Q 3/00

(54) **Method and apparatus for processing telephone calls**

(30) Priority: 03.10.1995 US 538331
(71) Applicant: AT&T Corp., New York, NY 10013-2412 (US)
(72) Inventor: Foladare, Mark Jeffrey, Kendall Park, New Jersey 08824 (US); Goldman, Shelley B., East Brunswick, New Jersey 08816 (US); Silverman, David Phillip, Somerville, New Jersey 08876 (US)
(74) Representative: KUHNEN, WACKER & PARTNER

(57) **Abstract**

A method and apparatus for processing telephone calls based on variable telephone call parameters is disclosed. A telecommunication network node is connected to a database which stores telephone subscriber preference data describing subscriber preferences. In one embodiment, the database contains subscriber preference data defining the type of telephone services to be applied to outgoing telephone calls. Upon receipt of the outgoing call at the node, the node performs a database search using variable telephone call parameters and retrieves a telephone call service description. The telephone call service description describes the type of service to apply to the call. The call is completed with the described services being applied to the call. In another embodiment, the database contains subscriber preference data defining routing instructions for incoming calls. Upon receipt of the incoming call at the node, the node performs a database search using variable telephone call parameters and retrieves routing instructions. The routing instructions indicate whether the call is to be routed to the subscriber or to an alternate destination. The call is completed by routing it according to the retrieved routing instructions.

## Description

### Field of the Invention

The present invention relates to processing telephone calls in a telecommunications network. More particularly, the present invention relates to processing telephone calls in accordance with variable telephone call parameters and subscriber preferences.

### Background of the Invention

There has been a recent increase in the number of people working out of the home and telecommuting. As a result, the home telephone is now being used for a combination of business calls and personal calls. Such sharing of a single telephone line between business and personal calls presents the problem of distinguishing between the two uses. With respect to outgoing calls, the distinction is important because, for example, there are different billing programs, and different services, available for business and personal telephone calls. With respect to incoming calls, the distinction is important because, for example, it may be desirable to know whether the incoming call is a business call or a personal call.

One solution to the problem is to install a second telephone line in the home. A first telephone line, with an associated first telephone number, is a dedicated business line. A second telephone line, with an associated second telephone number, is a dedicated personal line. In such a solution, the first telephone line has business services associated with it. The second telephone line has personal services associated with it. The problem with such a solution is that installing and maintaining a second telephone line in the home is expensive.

A solution that partially alleviates the problem is to associate two or more telephone numbers with a single home telephone line. In such a system, each of the associated telephone numbers are routed to the single telephone line. This type of routing is possible because telephone numbers in telecommunication systems are generally translated to a routing number, and that routing number determines to which telephone line the call will be routed. In the multiple telephone number solution, each of the telephone numbers is mapped to the single routing number of the home telephone. As a result, a call to any one of the telephone numbers is routed to the home telephone. Such a system allows for a service known as distinctive ring, in which each telephone number may be associated with a different type of ring, so that the telephone subscriber who has the service knows which telephone number was dialed to reach the home telephone. Thus, for example, the telephone subscriber can know whether the phone is ringing as a result of a caller dialing a business telephone number or a personal telephone number. Such a service does not affect the routing of incoming calls, and has no effect on outgoing telephone calls.

### Summary of the Invention

The present invention provides a method and apparatus for processing a telephone call based on variable parameters (i.e. characteristics) of the call. Such processing is particularly useful for telephone service subscribers with only one telephone line. The variable processing allows such subscribers to vary their telephone service depending on variable parameters of each incoming and outgoing telephone call. Such variable parameters may include, for example, called telephone number, calling telephone number, time of call, etc. A subscriber may customize his/her telephone service by defining subscriber preferences and storing subscriber preference data in a database. This preference data is retrieved from the database when the subscriber places or receives a telephone call, and the call is processed in accordance with the retrieved preference data.

In particular embodiments, the invention allows subscribers with one telephone line to vary the services which apply to outgoing telephone calls and to vary routing options for incoming telephone calls.

In accordance with one embodiment of the invention, telephone services are applied to subscriber outgoing telephone calls based on variable parameters of the call. Such telephone services may be, for example, business or personal telephone services. Upon placing an outgoing call, a telecommunications network node receives the call and performs a database lookup based on variable parameters of the call. Such variable parameters may include, for example, the called number and the time of the call. The database lookup retrieves stored subscriber preference data which includes a telephone service description describing the services to apply to the call. The call is completed with the appropriate services being applied to the call.

In accordance with another embodiment of the invention, an incoming telephone call is routed based on variable parameters of the call. Upon receipt of an incoming call, a telecommunications network node receives the call and performs a database lookup based on variable parameters of the call. Such variable parameters may include, for example, the calling number and the time of the call. The database lookup retrieves stored subscriber preference data which indicates the routing instructions to be applied to the call. Such routing instructions may indicate, for example, that the incoming call should be connected to the subscriber telephone, or that the incoming call should be routed to an alternate destination, for example a voice mail unit. The call is routed using the retrieved routing information.

In accordance with another embodiment, the principles of the invention are applied in a system of the type in which a subscriber telephone with a single connection to a telecommunications network is assigned multiple telephone numbers, with each of the multiple telephone numbers being mapped to a single routing number such that a telephone call placed to any one of the multiple telephone numbers is normally routed to the subscriber telephone. In this embodiment, the number called (which is one of the multiple telephone numbers) is one of the variable telephone call parameters used to perform the database search.

These and other advantages of the invention will be apparent to those of ordinary skill in the art by reference to the following detailed description and the accompanying drawings.

### Brief Description of the Drawings

Fig. 1 shows a system for processing telephone calls in accordance with the principles of the invention.

Fig. 2 shows a flow diagram for processing outgoing telephone calls in accordance with the principles of the invention.

Fig. 3 shows a flow diagram for processing incoming telephone calls in accordance with the principles of the invention.

Fig. 4 shows a lookup table for storing subscriber preference data in accordance with outgoing call processing.

Fig. 5 shows a lookup table for storing subscriber preference data in accordance with incoming call processing.

Fig. 6 shows a lookup table for storing subscriber preference data in accordance with incoming call processing in a system where multiple telephone numbers may be routed to a single telephone line.

### Detailed Description

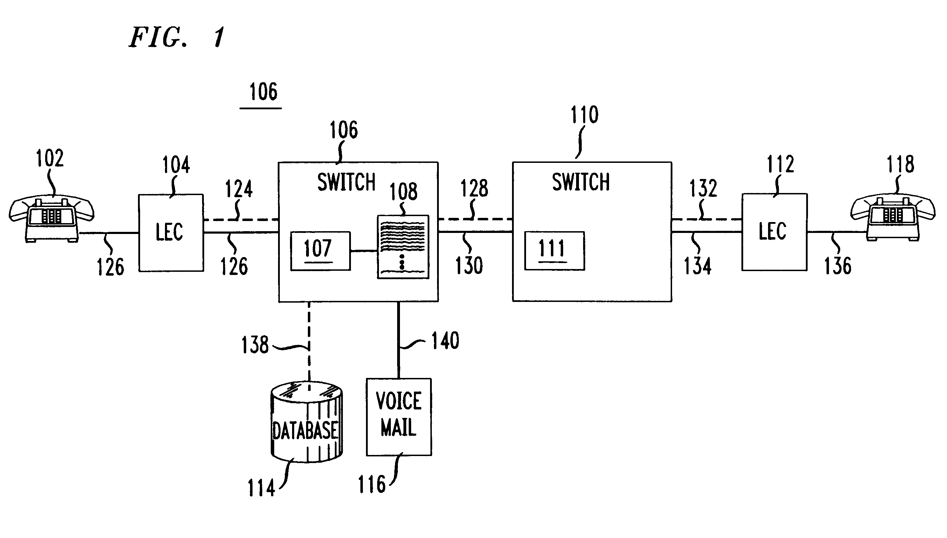

Fig. 1 shows system 100 for processing telephone calls in accordance with the principles of the present invention. A telephone 102 is associated with a telephone subscriber who subscribes to customizable telephone service which is provided in accordance with the principles of the present invention. With respect to outgoing telephone calls from telephone 102, a caller places a telephone call to telephone 118. The call passes over line 122 to a local exchange carrier 104. It is noted that line 122 is a single line such that telephone 102 is connected to the telecommunications network via a single telephone line. The call is routed to switch 106 over line 126. The call is then routed to switch 110 over line 130. Switches 106 and 110 may be, for example, AT&T 4ESS switches. Switch 110 routes the call to local exchange carrier 112 over line 134. Local exchange carrier 112 routes the call to the called telephone 118 over line 136. It is to be understood that the telephone call may be routed to additional switches in route from local exchange carrier 104 to local exchange carrier 112. As shown in Fig. 1, local exchange carriers 104 and 112, and switches 106 and 110, are telecommunication network nodes. The routing of calls through nodes in telecommunications networks is well known, and other convention arrangements may be employed in routing the telephone call from telephone 102 to telephone 118.

It is noted that switches 106 and 110 in the telecommunications network are "intelligent" switches, in that they contain (or are connected to) processing units, 107 and 111 respectively, which may be programmed to carry out various functions in the network. Such use of processing units in telecommunications network switches, and the programming thereof, is well known in the art.

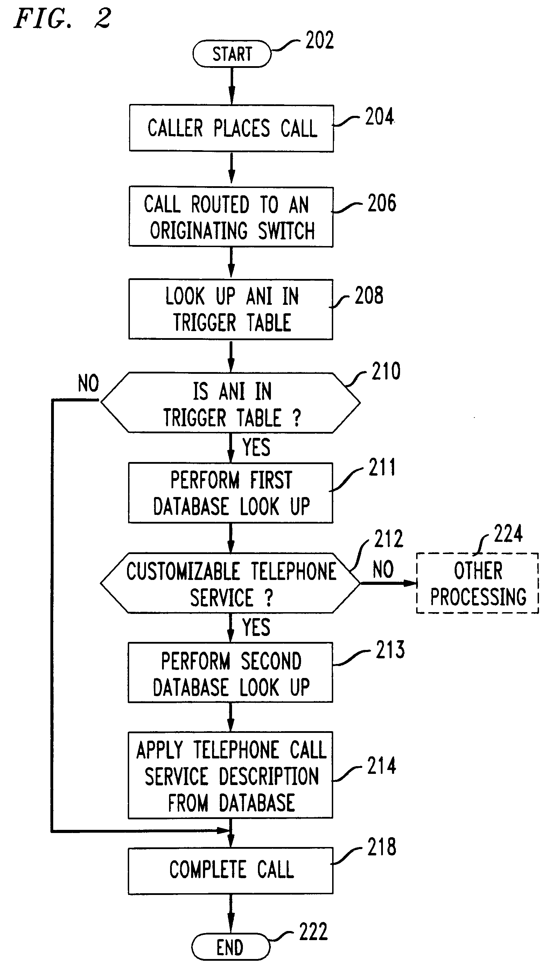

Telephone call processing in accordance with the present invention is described in conjunction with Fig. 2, which shows a flow diagram for processing outgoing telephone calls in accordance with the present invention. As used herein, the terms "outgoing" and "incoming" are used relative to telephone 102, which is the telephone associated with the customizable telephone service subscriber. In step 204, a caller places a telephone call from telephone 102 to telephone 118. In step 206 the call is routed to originating access switch 106. Switch 106 is called an originating access switch because it is the first switch in the long distance network following the local exchange carrier. Such routing is accomplished by first routing the call to local exchange carrier 104 via line 122. Local exchange carrier 112 in turn routes the call to the originating switch 106 over line 126. In addition, the local exchange carrier 104 provides the telephone number of telephone 102, and the telephone number of telephone 118, to switch 106 over a data link 124. Data links in telecommunications networks are well known, and such a link may be, for example, a signaling system 7(SS7) link. The telephone number of a calling telephone (telephone 102 in this example), is called the ANI (automatic number identification) number. The telephone number of a called telephone (telephone 118 in this example) is called the DN (dialed number). Thus, the ANI of telephone 102 and the DN of telephone 118 are provided to switch 106 from the local exchange carrier 104 via data link 124.

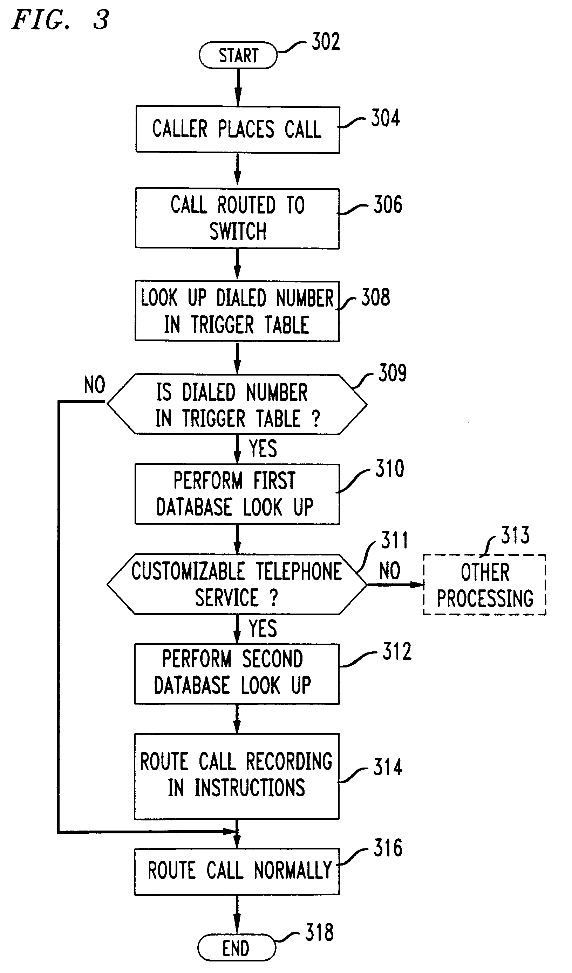

In step 208, processing unit 107 looks up the ANI number provided by local exchange carrier 104 in a trigger table 108 which is stored in switch 106. The trigger table 108 contains a list of special telephone service subscriber telephone numbers, such that if a telephone number exists in the ANI table 108, switch 106 will recognize that the telephone associated with that telephone number belongs to a special telephone service subscriber, and telephone calls to and from that telephone require special processing (e.g. customizable telephone service). The processing of incoming calls to such a subscriber are described below in conjunction with Fig. 3.

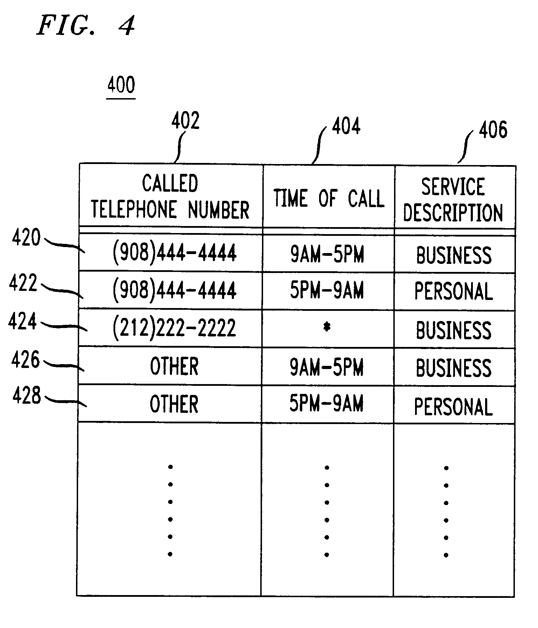

If it is determined in step 210 that the provided ANI exists in trigger table 108, then in step 211, processor 107 performs a first database lookup to determine the type of special processing required. Such information is stored in a table in database 114 which associates the telephone number with the type of special processing required for that telephone number. Database 114 is connected to switch 106 via data link 138. If it is determined in step 212 that the special service is customizable telephone service, then processor 107 performs a second database lookup in step 213 to determine subscriber preferences as described below in conjunction with Fig. 4. Such subscriber preferences are stored in database 114 as subscriber preference data.

If it is determined in step 212 that the special service required is not customizable telephone service, then some other type of special processing is provided in step 224. Such other type of special processing is not important to the description of the present invention and will not be further described herein.

Returning now to the database lookup of step 213, in one embodiment, the stored subscriber preference data is stored in a lookup table such as table 400 shown in Fig. 4. Table 400 contains two key fields 402 and 404, and one result field 406. The key fields are used to search the table 400 and to select a record from the table, with the result field containing the desired data resulting from the search. For example, table 400 contains key field 402 which contains the called telephone number (DN) and key field 404 which contains the time of the call. These key fields represent variable telephone call parameters. As used herein, the term variable telephone call parameter is used to describe a parameter (i.e. characteristic) of a telephone call which is variable with respect to the subscriber telephone 102. The particular parameters of a call which are variable will depend on the type of call (e.g. incoming or outgoing) and on the particular embodiment. For example, for outgoing calls, the called number and time of call are variable in that for each call placed from the subscriber telephone number, the called number and time of call may vary. The calling number (i.e. the number of the subscriber telephone 102) is not variable for outgoing calls because it does not vary with each call. With respect to incoming calls, the calling number and time of call are variable in that for each call placed to the subscriber telephone number the calling number and the time of the call may vary. For incoming calls, the called number may or may not be variable, depending on whether the subscriber telephone has multiple telephone numbers associated with it. Incoming call processing is described in further detail below.

Thus, for each call placed from telephone 102, the called telephone number and the time of the call are variable. Given a combination of variable telephone call parameter values, a record can be selected from table 400, and a telephone call service description for the particular telephone call can be determined with reference to the service description field 406 associated with the selected record. An example of such a database lookup is described below. The telephone call service description defines the type of services, e.g. business or personal, which are to be applied to a call. Thus, a subscriber may customize his/her telephone call service preferences by defining variable telephone call parameter values and associated telephone service descriptions to be stored as subscriber preference data in table 400.

For example, record 420 in table 400 indicates that if the subscriber has called telephone number (908) 444-4444¹ between 9am and 5pm, the call should be considered a business call, and business services should be applied to this call. Record 422 in table 400 indicates that if the subscriber has called telephone number (908) 444-4444 between 5pm and 9am, the call should be considered a personal call, and personal services should be applied to this call. Thus, records 420 and 422, taken together, indicate that a call to telephone number (908) 444-4444 may be considered personal or business, depending upon the time the call is placed. Record 424 in table 400 indicates that if the subscriber has called telephone number (212) 222-2222, it is always to be considered a business call, regardless of the time of day. Thus, the "*" in a field indicates that the record can be selected for all values of the variable parameter represented by the field. Record 426 in table 400 indicates that if the subscriber has called a telephone number other than those enumerated in the table 400, then if the call is placed between 9am and 5pm the call is to be considered a business call, and business telephone call services are to be applied to the call. Record 428 in table 400 indicates that if the subscriber has called a telephone number other than those enumerated in the table 400, then if the call is placed between 5pm and 9am the call is to be considered a personal call, and personal telephone call services are to be applied to the call. Thus, records 426 and 428, taken together, describe default options.
¹Telephone numbers are used herein for example purposes only. There is no significance to the use of any particular telephone number other than for exemplification of the present invention. No reference to actual telephone numbers is intended.

Thus, each subscriber will have an associated table containing subscriber preference data, such as table 400, defining the associated subscriber's preferences for outgoing calls. As will be recognized by those skilled in the art, a large variety of subscriber preferences may be encoded in table 400. Further, other variable telephone call parameters, in addition to the called telephone number and the time of the call, may also be encoded in a table such as table 400. Further, telephone call service descriptions, other than business or personal, may be defined and applied to completed calls as a result of the table lookup. Thus, such an arrangement provides a flexible technique for defining subscriber preferences with respect to telephone call service descriptions.

The telephone call service description, which was determined as a result of the database lookup, is applied to the telephone call in step 214. Thus, upon connection of the call the service described in the telephone call service description will be associated with the call. Such association of services with the call may be accomplished, for example, by associating the call with a particular account number (e.g. a business account number or a personal account number). In step 218, the call is completed by routing it to telephone 118 as described above. If it was determined in step 210 that the ANI provided to switch 106 from local exchange carrier 104 is not in the trigger table 108, then the telephone 102 does not belong to a customizable telephone service subscriber, and the call is completed in step 218, without performing steps 212 through 214. The process ends in step 222.

In another embodiment of the invention, the subscriber may be provided with an opportunity to override the stored subscriber preference data stored in table 400 for particular outgoing calls and indicate that a telephone call service description other than that described by a record in table 400 is to be applied. For example, for a single call, the subscriber may wish to apply a personal service description to a telephone call made to telephone number (908) 444-4444 between 9am and 5pm, in contradiction to record 420. In this embodiment, the system may provide a prompt, followed by a short pause, to the user, prior to connecting the call, such that the user has an opportunity to send a dual tone multi-frequency (DTMF) signal by pressing a sequence of keys on telephone 102 keypad. The DTMF signal tone sequence would indicate the type of service the user wishes to associate with the particular call. The signal tone sequence would be received by switch 106, at which time processing unit 107 will decode the signal tone sequence and apply the requested service description to the call. Such decoding of DTMF keys and responding to such keys is well known in the art.

Fig. 3. shows a flow diagram for processing incoming telephone calls in accordance with the principles of the present invention. With respect to an incoming call, i.e. a call from telephone 118 to subscriber telephone 102, the call is routed in a manner similar to that described above in conjunction with outgoing calls.

In step 304, a caller places a telephone call from telephone 118 to telephone 102. In step 306 the call is routed to switch 106. Such routing is accomplished by first routing the call to local exchange carrier 112 via line 136. Local exchange carrier 112 in turn routes the call to switch 110 over line 134. Switch 110 routes the call to switch 106 via line 130. In addition, the local exchange carrier 112 provides the telephone number of telephone 118, and the telephone number of telephone 102 to switch 110 over a data link 132. In the case of incoming calls, the telephone number of calling telephone 118 is the ANI number and the telephone number of the called telephone 102 is the DN. Switch 110, in turn, provides the ANI number and DN to switch 106 over data link 128.

In step 308, processing unit 107 looks up the provided DN in trigger table 108. As described above, the trigger table 108 contains a list of special telephone service subscriber telephone numbers, such that if a telephone number exists in table 108, switch 106 will recognize that the telephone assigned that telephone number belongs to a special telephone service subscriber, and telephone calls to and from that telephone require special processing (e.g. customizable telephone service).

If it is determined in step 310 that the DN exists in trigger table 108, then in step 310, processor 107 performs a first database lookup to determine the type of special processing required. Such information is stored in a table in database 114 which associates telephone numbers with the type of special processing required for that telephone number. Database 114 is connected to switch 106 via data link 138. If it is determined in step 311 that the special service is customizable telephone service, then processor 107 performs a second database lookup in step 312 to determine routing instructions in accordance with subscriber preferences. Such preferences are stored in database 114 as subscriber preference data.

If it is determined in step 311 that the special service required is not customizable telephone service, then some other type of special processing is provided in step 313. Such other type of special processing is not important to the description of the present invention, and will not be further described herein.

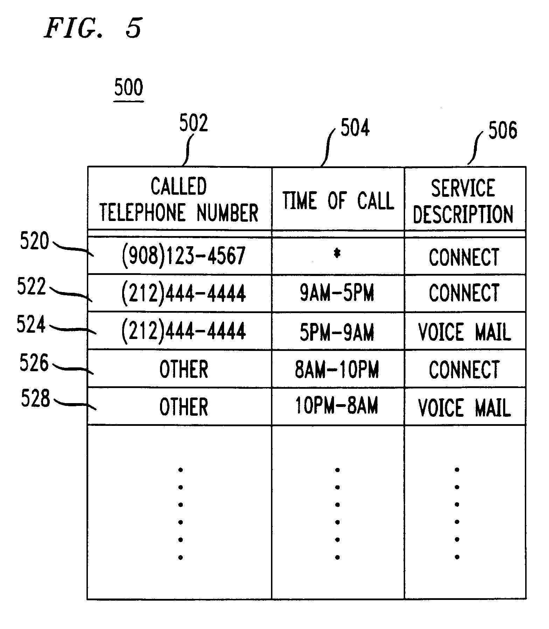

Returning now to the database lookup in step 312, in one embodiment, the stored subscriber preference data is stored in a table such as table 500 shown in Fig. 5. Table 500 contains two key fields 502 and 504, and one result field 506. Key field 502 contains the caller telephone number (ANI) and key field 504 which contains the time of the call. These key fields are variable telephone call parameters, in that they are variable with respect to the telephone 102 of the subscriber. Thus, for each call placed to telephone 102, the caller telephone number and the time of the call may vary. Given a unique combination of variable telephone call parameters, routing instructions for a particular telephone call can be determined by selecting an appropriate record from table 500 and retrieving the routing instructions from the routing instruction field 506 of the selected record. An example of such a database lookup is described below. Thus, a subscriber may customize his/her telephone call routing preferences by defining variable telephone call parameter values and associated routing instructions to be stored as subscriber preference data in table 500.

For example, record 520 in table 500 indicates that if the incoming call originated at telephone number (908) 123-4567, then the call should be connected to the subscriber telephone, regardless of the time of the call. The "*" in field 504 indicates that the record can be selected for all values of the variable parameter represented by the field. The routing instruction field 506 for record 520 indicates that the call should be connected to the subscriber. Record 522 in table 500 indicates that if the incoming call originated at telephone number (212) 444-4444 between 9am and 5pm, the call should be connected to the subscriber. Record 524 in table 500 indicates that if the incoming call originated at telephone number (212) 444-4444, between 5pm and 9am, the call should be routed to a voice mail system, such as voice mail unit 116 (Fig. 1). Thus, records 522 and 524, taken together, indicate that calls originating from telephone number (212) 444-4444 are business calls, and should only be routed to subscriber telephone 102 during business hours.

Record 526 in table 500 indicates that if the incoming call originated at a telephone number other than those enumerated in the table 500, then if the call is placed between 8am and 10pm the call is to be connected to the subscriber. Record 528 in table 500 indicates that if the incoming call originated at a telephone number other than those enumerated in the table 500, then if the call is placed between 10pm and 8am, the call is to be routed to a voice mail system, such as voice mail unit 116. Record 526 and 528, taken together, describe a default option.

Thus, each customizable telephone service subscriber will have an associated table containing subscriber preference data, such as table 500, defining the associated subscriber's preferences for incoming calls. As will be recognized by those skilled in the art, a large variety of subscriber preferences may be encoded in table 500. Further, variable telephone call parameters, in addition to the caller telephone number and the time of the call may be encoded in a table such as table 500. Further, telephone call routing instructions, other than connecting to the subscriber or to a voice mail unit may be defined and applied to calls as a result of the table lookup. Thus, such an arrangement provides a flexible technique for defining subscriber preferences with respect to telephone call routing instructions.

After the database lookup, the telephone call routing instructions, which were determined as a result of the database lookup, are used to route the telephone call in step 314. The routing of telephone calls in a telecommunications network is well known in the art. If it was determined in step 310 that the DN provided to switch 106 from local exchange carrier 112 is not in trigger table 108, then the telephone 102 does not belong to a customizable telephone service subscriber, and the call is routed in step 316, without performing steps 312 through 314. The process ends in step 318.

In an alternate embodiment, the subscriber telephone 102 is of the type which has two or more telephone numbers assigned to it, although there is only a single connection 122 to the telecommunications network. Such techniques are known in the art and are made possible by routing numbers. In the system 100 of Fig. 1, telephone 102 is assigned a unique routing number. Thus, the telephone 102 may be assigned multiple telephone numbers, and each of those telephone numbers is mapped to the single routing number by local exchange carrier 104. Thus, when local exchange carrier 104 receives a telephone call made to any of the telephone numbers assigned to telephone 102, the call is routed to telephone 102 via single line 122. Such a configuration may be used in conjunction with incoming call processing in accordance with the present invention as follows.

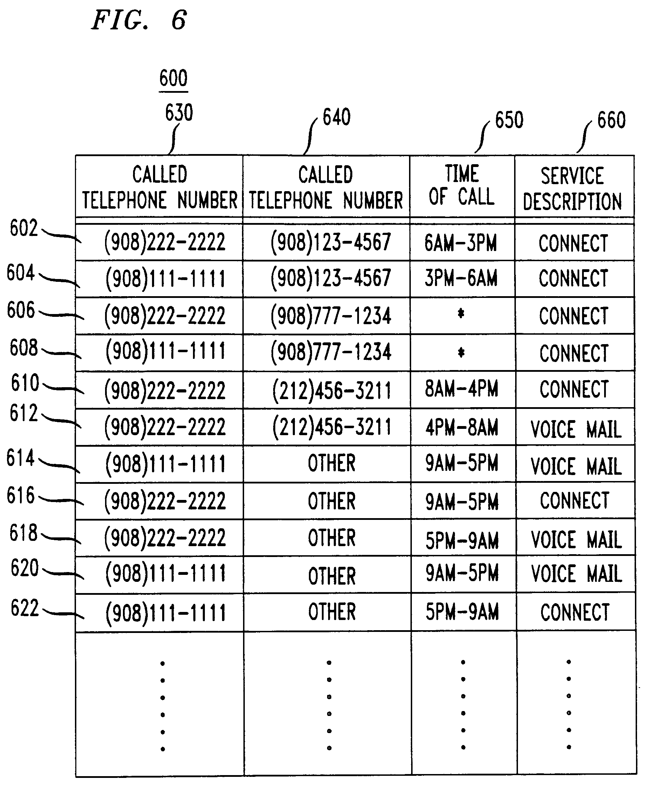

In the multiple telephone number embodiment, the steps of incoming call processing are the same as described above in conjunction with Fig. 3. In one aspect of this embodiment, each telephone number associated with the subscriber telephone 102 is stored in trigger table 108 so that the test in step 310 will be true when a caller dials any of the telephone numbers associated with subscriber telephone 102. However, the database lookup table contains an additional variable telephone call parameter field for the called number. Such a table is shown as table 600 in Fig. 6. Table 600 contains key fields 630, 640, and 650. These fields represent the variable telephone call parameters of called telephone number, caller telephone number, and time of call, respectively. Table 600 contains a result field 660, which contains routing instructions. Assume that subscriber telephone number (908) 222-2222 is a business telephone number and subscriber telephone number (908) 111-1111 is a personal telephone number. As described above, both of these telephone numbers, when dialed by a calling telephone, will be routed to telephone 102 over single telephone line 122. Record 602 in table 600 indicates that if the incoming call was made to telephone number (908) 222-2222 (the business telephone number) from calling telephone number (908) 123-4567 between 6am and 3pm, the call should be connected to subscriber telephone 102. Record 604 in table 600 indicates that if the incoming call was made to telephone number (908) 111-1111 (the personal telephone number) from calling telephone number (908) 123-4567 between 3pm and 6am, the call should be connected to subscriber telephone 102. Thus, records 602 and 604, taken together, indicate that the subscriber may expect both business and personal calls from incoming telephone number (908) 123-4567.

Record 606 in table 600 indicates that if the incoming call was made to telephone number (908) 222-2222 (the business telephone number) from calling telephone number (908) 777-1234 at any time, the call should be connected to subscriber telephone 102. Record 608 in table 600 indicates that if the incoming call was made to telephone number (908) 111-1111 (the personal telephone number) from calling telephone number (908) 777-1234 at any time, the call should be connected to subscriber telephone 102. Records 606 and 608, taken together, indicate that calls from incoming telephone number (908) 777-1234 are important calls and should be accepted at any time regardless of to which incoming telephone number the call was placed.

Record 610 in table 600 indicates that if the incoming call was made to telephone number (908) 222-2222 (the business telephone number) from calling telephone number (212) 456-3211 between 8am and 4pm, the call should be connected to subscriber telephone 102. Record 612 in table 600 indicates that if the incoming call was made to telephone number (908) 222-2222 (the business telephone number) from calling telephone number (212) 456-3211 between 4pm and 8am, the call should be connected to a voice mail unit, such as voice mail unit 116. Record 614 in table 600 indicates that if the incoming call was made to telephone number (908) 111-1111 (the personal telephone number) from calling telephone number (212) 456-3211 at any time, the call should be connected to a voice mail unit, such as voice mail unit 116. Thus, records 610, 612, and 614, taken together, indicate that calls from incoming telephone number (212) 456-3211 are business calls, and should only be connected to subscriber telephone 102 if the call is placed to the business telephone number between 9am and 5pm.

Record 616 in table 600 indicates that if the incoming call was made to telephone number (908) 222-2222 (the business telephone number) from a calling telephone number other than one enumerated in table 600, between 9am and 5pm, the call should be connected to subscriber telephone 102. Record 618 in table 600 indicates that if the incoming call was made to telephone number (908) 222-2222 (the business telephone number) from a calling telephone number other than one enumerated in table 600, between 5pm and 9am, the call should be connected to a voice mail unit, such as voice mail unit 116. Thus, records 616 and 618, taken together, indicate that calls made to the business telephone number should generally only be connected to the subscriber telephone 102 during business hours, unless specifically indicated otherwise by subscriber preference data stored in table 600.

Record 620 in table 600 indicates that if the incoming call was made to telephone number (908) 111-1111 (the personal telephone number) from a calling telephone number other than one enumerated in table 600, between 9am and 5pm, the call should be connected to a voice mail unit, such as voice mail unit 116. Record 622 in table 600 indicates that if the incoming call was made to telephone number (908) 111-1111(the personal telephone number) from a calling telephone number other than one enumerated in table 600, between 5pm and 9am, the call should be connected to subscriber telephone 102. Thus, records 616 and 618, taken together, indicate that calls made to the personal telephone number should generally only be connected to the subscriber telephone 102 during non-business hours, unless specifically indicated otherwise by subscriber preference data stored in table 600.

It is noted that in the multiple telephone number embodiment, outgoing call processing is the same as described above in conjunction with Fig. 2. In such an embodiment, one of the multiple telephone numbers associated with subscriber telephone 102 is considered the primary telephone number. The primary telephone number is the telephone number sent to switch 106 by the local exchange carrier 104 via data link 124 as the ANI number. Thus, the primary telephone number is the telephone number which is stored in trigger table 108 to identify the outgoing call as one originating from a telephone belonging to a customizable telephone service subscriber.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention.

## Claims

1. A method for processing a telephone call in accordance with telephone subscriber preferences, the method comprising the steps of:
receiving at a telecommunications network node a subscriber identification;
in response to said subscriber identification and at least one variable telephone call parameter, classifying said telephone call based on stored telephone subscriber preference data; and
processing said telephone call based on said classifying step.

2. The method of claim 1 wherein:
said step of classifying further comprises the step of determining a telephone call service description; and
said step of processing further comprises the step of applying said telephone call service description to said telephone call.

3. The method of claim 1 wherein:
said step of classifying further comprises the step of determining routing information; and
said step of processing further comprises the step of routing said telephone call based on said routing information.

4. The method of claim 3 wherein said step of routing further comprises the step of routing said telephone call to said telephone subscriber.

5. The method of claim 3 wherein said step of routing further comprises the step of routing said telephone call to an alternate destination.

6. A method for completing a telephone call originating from a calling telephone and placed to a called telephone, and for applying a telephone call service description to the telephone call, the method comprising the steps of:
determining at a telecommunications network node a telephone call service description to apply to the telephone call, based upon at least one variable telephone call parameter, wherein said at least one variable telephone call parameter may vary with each telephone call from said calling telephone;
applying said telephone call service description to said telephone call; and
routing said telephone call to said called telephone.

7. The method of claim 6 wherein said step of applying said telephone call service description further comprises the steps of:
providing a user of said calling telephone with an opportunity to override said determined telephone call service description and to indicate a user selected telephone call service description; and
applying said user selected telephone call service description to said telephone call.

8. The method of claim 6 wherein said at least one variable telephone call parameter includes the telephone number of said called telephone.

9. The method of claim 6 wherein said at least one variable telephone call parameter includes the time said telephone call is placed and the telephone number of said called telephone.

10. The method of claim 2 or 6 wherein said telephone call service description describes personal telephone call services.

11. The method of claim 2 or 6 wherein said telephone call service description describes business telephone call services.

12. The method of claim 6 wherein said step of determining further comprises the step of comparing said at least one variable telephone call parameter to stored telephone subscriber preference data.

13. The method of claim 6 wherein said step of determining further comprises the step of performing a database lookup using said at least one variable telephone call parameter.

14. A method for routing a telephone call originating from a calling telephone and placed to a called telephone, the method comprising the steps of:
receiving subscriber identification at a telecommunications network node;
determining routing instructions for the telephone call based on said subscriber information and at least one variable telephone call parameter, said at least one variable telephone call parameter being variable with respect to said called telephone; and
routing said telephone call according to said routing instructions.

15. The method of claim 18 wherein said at least one variable telephone call parameter includes the telephone number of the calling telephone.

16. The method of claim 9 or 14 wherein said at least one variable telephone call parameter includes the time the telephone call was places.

17. The method of claim 14 wherein said at least one variable telephone call parameter includes the telephone number of the calling telephone and the time the telephone call was placed.

18. The method of claim 1 or 14 wherein said step of receiving further comprises the step of receiving at least one variable telephone call parameter.

19. An apparatus for processing a telephone call from a caller to a called party, the apparatus comprising:
a storage device containing telephone subscriber preference data, said telephone subscription preference data comprising a plurality of records, each of said records comprising at least one variable telephone call parameter associated with classification data;
a switch connected to said storage device, said switch receiving subscriber identification from a telecommunications network,
said switch further comprising a processing unit configured for comparing said subscriber identification and at least one variable telephone call parameter to said telephone subscriber preference data, and for determining a classification of said telephone call based on said comparison.

20. The apparatus of claim 19 further comprising:
means for routing said telephone call based on said classification.

21. The apparatus of claim 19 further comprising:
means for applying a telephone call service description to said telephone call based on said classification.

22. An apparatus for routing a telephone call originating from a calling telephone and placed to a called telephone, the apparatus comprising:
a storage device containing telephone subscriber preference data, said telephone subscription preference data comprising a plurality of records, each of said records comprising at least one variable telephone call parameter associated with routing data;
a switch connected to said storage device, said switch receiving subscriber identification;
said switch further comprising a processor configured for comparing at least one variable telephone call parameter with said telephone subscriber preference data, and for routing said telephone call in response to said comparison.

23. The apparatus of claim 22 wherein said at least one variable telephone call parameter comprises calling telephone number identification.

24. The apparatus of claim 22 wherein said at least one variable telephone call parameter comprises time of call information.

25. An apparatus for completing a telephone call from a calling telephone to a called telephone, and for applying a telephone call service description to said telephone call, the apparatus comprising:
a storage device containing telephone subscriber preference data, said telephone subscription preference data comprising a plurality of records, each of said records comprising at least one variable telephone call parameter associated with telephone call service description data; a processing unit connected to said storage device configured for:
comparing at least one variable characteristic of said telephone call with said telephone subscriber preference data, wherein said at least one variable characteristic is variable with respect to each telephone call from said calling telephone,
applying a telephone call service descriptions to said telephone call in response to said comparison, and
routing said telephone call to said called telephone.

26. The apparatus of claim 25 wherein said processing unit is a node in a telecommunications network.

27. The apparatus of claim 25 wherein said telephone call service description describes personal telephone call services.

28. The apparatus of claim 25 wherein said telephone call service description describes business telephone call services.
